# EUROPÄISCHE PATENTANMELDUNG

(11) **EP 4 494 434 A1**
(43) Veröffentlichungstag der Anmeldung: **22.01.2025**
(21) Anmeldenummer: 24178503.9
(22) Anmeldetag: 28.05.2024
(51) Int. Cl.: A01B 59/00, F16L 37/56

(54) **MULTIKUPPLUNGSVORRICHTUNG FÜR EINE LANDWIRTSCHAFTLICHE ARBEITSMASCHINE**

(30) Priorität: 07.07.2023 DE 102023117996
(71) Anmelder: CLAAS Selbstfahrende Erntemaschinen GmbH, 33428 Harsewinkel (DE)
(72) Erfinder: Mutzke, Erik, 33330 Gütersloh (DE)
(74) Vertreter: CLAAS 365FarmNet GmbH

(57) **Zusammenfassung**

Die vorliegende Erfindung betrifft eine Multikupplungsvorrichtung für eine landwirtschaftliche Arbeitsmaschine, wobei die Multikupplungsvorrichtung einen ersten Kupplungsteil (1) und einen mit dem ersten Kupplungsteil (1) verbindbaren zweiten Kupplungsteil (19) aufweist, wobei am ersten Kupplungsteil (1) eine Arretiervorrichtung angeordnet ist, um in einer Arretierposition die beiden mit ihren Anlageflächen (21, 22) aneinander liegenden Kupplungsteile (1, 19) zu arretieren, wobei die Arretiervorrichtung ein mittig im ersten Kupplungsteil (1) angeordnetes, gegenüber dem ersten Kupplungsteil (1) relativbewegliches Verriegelungselement (5) aufweist, welches mit dem zweiten Kupplungsteil (19) in der Arretierposition in Eingriff bringbar ist.

## Beschreibung

Die vorliegende Erfindung betrifft eine Multikupplungsvorrichtung für eine landwirtschaftliche Arbeitsmaschine gemäß dem Oberbegriff des Anspruches 1. Weiterhin ist eine landwirtschaftliche Arbeitsmaschine mit einer Multikupplungsvorrichtung Gegenstand der Erfindung.

Eine Multikupplungsvorrichtung ist zum gleichzeitigen Anschluss mehrerer Schnellschlusskupplungen, wie sie insbesondere für den Anschluss von hydraulisch betriebenen Anbaugeräten an landwirtschaftlichen Arbeitsmaschinen verwendet werden, bestimmt, um durch den gleichzeitigen Anschluss von Druckmittelleitungen und elektrischen Anschlussverbindungen die Kupplungszeit zu verringern und die Möglichkeit eines Vertauschens oder Verwechselns der jeweiligen Verbindung der verschiedenen Schnellschlusskupplungen und Steckerteile zu vermeiden.

Eine Multikupplungsvorrichtung gemäß dem Oberbegriff des Anspruches 1 ist aus der EP 2 399 441 B1 bekannt. Dort ist eine Multikupplungsvorrichtung für eine landwirtschaftliche Arbeitsmaschine offenbart, wobei die Multikupplungsvorrichtung einen ersten Kupplungsteil und einen mit dem ersten Kupplungsteil verbindbaren zweiten Kupplungsteil aufweist. An dem ersten Kupplungsteil ist eine Arretiervorrichtung angeordnet, um die beiden mit ihren Anlageflächen aneinander liegenden Kupplungsteile zu arretieren. Hierzu weist die Arretiervorrichtung an den Außenseiten des ersten Kupplungsteils einander gegenüberliegend angeordnete Verriegelungsflansche auf. Die Verriegelungsflansche weisen jeweils eine Kurvenbahn auf, welche an den Außenseiten des zweiten Kupplungsteils axial hervorstehende Fixierstifte aufnehmen. Durch Schwenken der Verriegelungsflansche bewegen sich die Fixierstifte entlang der Kurvenbahnen und ziehen dabei das zweite Kupplungsteil an das erste Kupplungsteil bis zum Erreichen der Arretierposition heran. Zur Betätigung der Arretiervorrichtung ist ein Handhebel vorgesehen. Die beiden außenseitig angeordneten Verriegelungsflansche sind im Betrieb der landwirtschaftlichen Arbeitsmaschine einer starken Belastung durch Staub, Erdreich, Erntematerial und dergleichen ausgesetzt.

Der Erfindung liegt somit die Aufgabe zugrunde, eine Multikupplungsvorrichtung der eingangs genannten Art derart weiterzubilden, die sich durch eine robuste und kompaktere und weniger verschmutzungsanfällige Bauweise auszeichnet.

Diese Aufgabe wird erfindungsgemäß durch eine Multikupplungsvorrichtung mit den Merkmalen des Anspruches 1 gelöst. Vorteilhafte Weiterbildungen sind Gegenstand der hiervon abhängigen Ansprüche.

Gemäß dem Anspruch 1 wird eine Multikupplungsvorrichtung für eine landwirtschaftliche Arbeitsmaschine vorgeschlagen, wobei die Multikupplungsvorrichtung einen ersten Kupplungsteil und einen mit dem ersten Kupplungsteil verbindbaren zweiten Kupplungsteil aufweist, wobei am ersten Kupplungsteil eine Arretiervorrichtung angeordnet ist, um in einer Arretierposition die beiden mit ihren Anlageflächen aneinander liegenden Kupplungsteile zu arretieren. Erfindungsgemäß ist vorgesehen, dass die Arretiervorrichtung ein mittig im ersten Kupplungsteil angeordnetes, gegenüber dem ersten Kupplungsteil relativbewegliches Verriegelungselement aufweist, welches mit dem zweiten Kupplungsteil in der Arretierposition in Eingriff bringbar ist.

Die mittige Anordnung des Verriegelungselements im ersten Kupplungsteil weist gegenüber der Anordnung an den Außenseiten des ersten Kupplungsteils, wie es im genannten Stand der Technik der Fall ist, den Vorteil auf, dass die auf das zweite Kupplungsteil durch das Verriegelungselement aufgebrachte Haltekraft gleichmäßig über die Anlageflächen übertragen wird. Die mittige Anordnung ist zudem kompakter, da weniger Bauteile notwendig sind, die randseitig über die beiden Kupplungsteile hervorstehen. Zugleich wird durch die mittige Anordnung des Verriegelungselements erreicht, dass die Verschmutzungsgefahr reduziert wird.

Mit mittiger Anordnung des Verriegelungselements im ersten Kupplungsteil ist die räumliche Lage des Verriegelungselementes bezogen auf die Außenkontur des ersten Kupplungsteils bezeichnet. Das Verriegelungselement ist im Wesentlichen im geometrischen Zentrum des ersten Kupplungsteils angeordnet.

Insbesondere kann das Verriegelungselement sich senkrecht zur Anlagefläche des ersten Kupplungsteils erstreckend angeordnet sein, wobei das Verriegelungselement das erste Kupplungsteil in vertikaler Richtung durchdringt.

Bevorzugt kann das Verriegelungselement auf einer Welle angeordnet sein, die im ersten Kupplungsteil gelagert ist.

Weiterhin kann das Verriegelungselement durch ein randseitig am ersten Kupplungsteil angeordnetes Betätigungsmittel, welches drehfest am freien Ende der Welle angreift, betätigbar sein, um das Verriegelungselement durch Drehen der Welle zwischen einer Entriegelungsposition und der Arretierposition und umgekehrt zu überführen.

Insbesondere kann das erste Kupplungsteil eine achsparallel zur Längsachse des ersten Kupplungsteils verlaufende längsschlitzförmige Aussparung aufweisen, in welcher das das erste Kupplungsteil in vertikaler Richtung durchdringende Verriegelungselement um die Welle drehbar angeordnet ist.

Weiter bevorzugt kann an dem zweiten Kupplungsteil zumindest ein über die Anlagefläche des zweiten Kupplungsteils in vertikaler Richtung überstehendes Zentrierelement angeordnet sein, welches mit zumindest einer korrespondierend geformten Aufnahme in der Anlagefläche des ersten Kupplungsteils formschlüssig in Eingriff bringbar ist. Das zumindest eine Zentrierelement dient dazu, beim Vorgang des Arretierens ein Exaktes und gleichmäßiges Heranführen der beiden Kupplungsteile zu gewährleisten. Bevorzugt können zumindest drei Zentrierelemente vorgesehen sein, von denen zumindest zwei Zentrierelemente in Quer- und Längsrichtung voneinander abweichenden Positionen an dem zweiten Kupplungsteil angeordnet sind, beispielsweise in Dreieckform. Besonders bevorzugt können vier Zentrierelemente vorgesehen sein, wobei die Anordnung der vier Zentrierelemente von einer quadratischen Anordnung abweicht. Hierdurch lässt sich eine ungewollte Verbindung von falschen Leitungen vermeiden.

Des Weiteren kann das zumindest eine Zentrierelement stiftförmig ausgeführt sein und an seinem freien Ende eine Nut aufweisen, in welcher ein Dichtelement angeordnet ist. Die zumindest eine korrespondierend geformte Aufnahme kann als Durchgangsbohrung im ersten Kupplungsteil ausgeführt sein. Durch die Anordnung des Dichtelements am freien Ende des zumindest einen Zentrierelementes wird beim Einführen in die Aufnahme ein Reinigungseffekt erreicht. Dadurch lassen sich Schmutzeintrag sowie Verschleiß der Multikupplungsvorrichtung reduzieren.

Bevorzugt kann das Verriegelungselement einen bogenförmigen Aufnahmebereich aufweisen, der ein im zweiten Kupplungsteil angeordnetes Lager während eines Arretiervorgangs aufnimmt, wobei das Lager in einem zur längsschlitzförmigen Aussparung des ersten Kupplungsteils achsparallele längsschlitzförmige Aussparung im zweiten Kupplungsteil angeordnet ist. Der bogenförmige Aufnahmebereich bildet eine Kurvenbahn aus, entlang der das Lager zum Überführen der beiden Kupplungsteile in die Arretierposition geführt wird. Eine rotatorische Schwenkbewegung des Betätigungsmittels wird von dem in der Kurvenbahn geführten Lager in eine translatorische Bewegung des zweiten Kupplungsteils transformiert, durch welche das zweite Kupplungsteil an das erste Kupplungsteil zum Arretieren herangezogen oder zum Lösen zu diesem beabstandet werden kann. Durch das zumindest eine Zentrierelement kann ein geradliniger Verlauf der translatorischen Bewegung des zweiten Kupplungsteils erreicht werden.

Insbesondere kann das Lager als Wälzlager ausgeführt sein. Vorteilhaft an einer Ausführung des in dem bogenförmigen Aufnahmebereich geführten Lagers als ein Wälzlager ist die gegenüber einem der Führung dienenden Stift, Bolzen oder dergleichen gegebene Rolleigenschaft, wodurch der Verschleiß verringert wird. Zudem kann der erforderliche Kraftaufwand bei der Betätigung verringert werden.

Gemäß einer Weiterbildung kann am ersten Kupplungsteil ein Deckel schwenkbar angelenkt sein, welcher eine zu seiner Längsachse achsparallel verlaufende längsschlitzförmige Aussparung aufweist, in welchem ein querverlaufender Steg angeordnet ist, welcher von dem bogenförmigen Aufnahmebereich zum Verschließen des ersten Kupplungsteils aufgenommen wird. Der Deckel dient dem Schutz des ersten Kupplungsteils vor Verschmutzung, wenn das erste Kupplungsteil nicht mit dem zweiten Kupplungsteil verbunden ist.

Bevorzugt kann das erste Kupplungsteil eine Grundplatte und eine lösbar an der Grundplatte angeordnete Deckplatte aufweisen, zwischen denen das an der Welle angeordnete Verriegelungselement und Betätigungsmittel mittels zumindest eines Gleitlagers gelagert sind. In der Grundplatte sind Kupplungsmuffen angeordnet. Durch die auf die Grundplatte aufsetzbare Deckplatte können Verbindungsstellen der Kupplungsmuffen verdeckt werden. Weiterhin kann die Deckplatte dazu dienen, das Betätigungsmittel zu fixieren. Für die Aufnahme des zumindest einen Gleitlagers, weisen die Grundplatte und die Deckplatte korrespondierende Ausnehmungen auf, zwischen denen das zumindest eine Gleitlager und die darin gelagerte Welle fixiert sind. Die Deckplatte dient zudem dazu, dass die Anlagefläche des ersten Kupplungsteils im Wesentlichen eben ausgeführt ist. Dadurch wird das Reinigen der Anlagefläche des ersten Kupplungsteils vereinfacht.

Insbesondere kann das Betätigungsmittel ein federbelastetes Arretierelement aufweisen, welches beim Erreichen der Arretierposition einen am ersten Kupplungsteil angeordneten Vorsprung hintergreift.

Dabei kann das Betätigungsmittel ein Griffteil umfassen, in welchem ein Federbolzen angeordnet ist, durch den zum Lösen der Arretierung des Betätigungsmittels eine der Federkraft entgegenwirkende Gegenkraft auf das Arretierelement ausübbar ist, um dieses axial zu verschieben.

Weiterhin kann die durch den Federbolzen aufbringbare Gegenkraft durch ein im Griffteil innenliegend angeordnetes Gestänge auf das arretierte Arretierelement aufbringbar sein.

Die erfindungsgemäße Aufgabe wird ferner durch eine landwirtschaftliche Arbeitsmaschine mit einer Multikupplungsvorrichtung nach einem der vorangehenden Ansprüche gelöst, wobei das erste Kupplungsteil an der Arbeitsmaschine angeordnet ist und das zweite Kupplungsteil an einem an der Arbeitsmaschine zu adaptierenden landwirtschaftlichen Anbaugerät.

Insbesondere kann die landwirtschaftliche Arbeitsmaschine als eine selbstfahrende Erntemaschine ausgeführt sein, vorzugsweise als ein Mähdrescher oder Feldhäcksler. Das zu adaptierende landwirtschaftliche Anbaugerät kann bevorzugt als ein Vorsatzgerät der selbstfahrenden Erntemaschine ausgeführt sein.

Die vorliegende Erfindung wird nachstehend anhand eines in den Zeichnungen dargestellten Ausführungsbeispieles näher erläutert.

Es zeigen:
- Fig. 1: schematisch und exemplarisch eine perspektivische Ansicht eines ersten Kupplungsteils einer Multikupplungsvorrichtung für eine landwirtschaftliche Arbeitsmaschine;
- Fig. 2: schematisch und exemplarisch eine perspektivische Ansicht des ersten Kupplungsteils gemäß Fig. 1 mit geöffnetem Deckel;
- Fig. 3: schematisch und exemplarisch eine perspektivische Ansicht eines zweiten Kupplungsteils der Multikupplungsvorrichtung;
- Fig. 4: schematisch und exemplarisch eine perspektivische Ansicht des ersten und zweiten Kupplungsteils vor dem Arretieren;
- Fig. 5: schematisch und exemplarisch eine perspektivische Ansicht von Grundplatte und Deckplatte des ersten Kupplungsteils; und
- Fig. 6: schematisch und exemplarisch eine perspektivische Ansicht eines Betätigungsmittels der Multikupplungsvorrichtung.

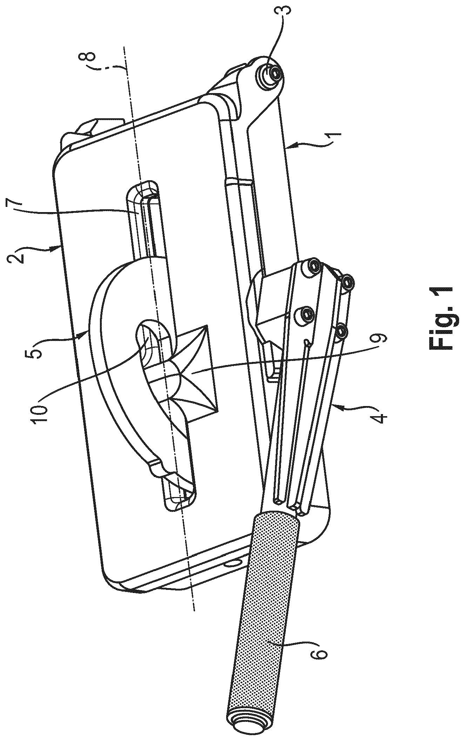

In Fig. 1 ist schematisch und exemplarisch eine perspektivische Ansicht eines ersten Kupplungsteils 1 einer Multikupplungsvorrichtung für eine landwirtschaftliche Arbeitsmaschine dargestellt. Das erste Kupplungsteil 1 ist durch einen Deckel 2 verschlossen, welcher um eine Achse 3 schwenkbar am ersten Kupplungsteil 1 angelenkt ist. Bei der landwirtschaftlichen Arbeitsmaschine kann es sich insbesondere um eine selbstfahrende Erntemaschine handeln. Mittels der Multikupplungsvorrichtung kann ein Vorsatzgerät gleichzeitig mit Druckmittelleitungen und/oder elektrischen Anschlussverbindungen der landwirtschaftlichen Arbeitsmaschine verbunden werden, wodurch sich die Kupplungszeit verringert.

An dem ersten Kupplungsteil 1 ist eine Arretiervorrichtung angeordnet, um in einer Arretierposition die beiden mit ihren Anlageflächen 21, 22 aneinander liegenden Kupplungsteile 1, 19 zu arretieren. Die Arretiervorrichtung weist ein mittig im ersten Kupplungsteil 1 angeordnetes, gegenüber dem ersten Kupplungsteil 1 relativbewegliches Verriegelungselement 5 auf.

An dem ersten Kupplungsteil 1 ist ein Betätigungsmittel 4 angeordnet. Das Betätigungsmittel 4 ist randseitig am ersten Kupplungsteil 1 angeordnet und dient der Betätigung des gegenüber dem ersten Kupplungsteil 1 relativbeweglichen Verriegelungselementes 5. Das als Hebelarm ausgeführte Betätigungsmittel 4 weist endseitig ein Griffteil 6 auf, welches neben seiner Funktion als Griff zusätzlich zum Lösen der Arretierung des Betätigungsmittels 4 in der Arretierposition des Verriegelungselements 5 dient. Das Verriegelungselement 5 ist im Wesentlichen plattenförmig ausgeführt.

Der Deckel 2 weist auf seiner Oberseite eine längsschlitzförmige Aussparung 7 auf, durch den das Verriegelungselement 5 hindurchgeführt ist. Die längsschlitzförmige Aussparung 7 im Deckel 2 verläuft achsparallel zur Längsachse 8 des Deckels 2. Auf der dem ersten Kupplungsteil 1 abgewandten Oberseite des Deckels 2 ist ein sich quer zur längsschlitzförmigen Aussparung 7 erstreckender Steg 9 angeordnet. Der Steg 9 ist von einem bogenförmig geformten Aufnahmebereich 10 des Verriegelungselements 5 aufgenommen.

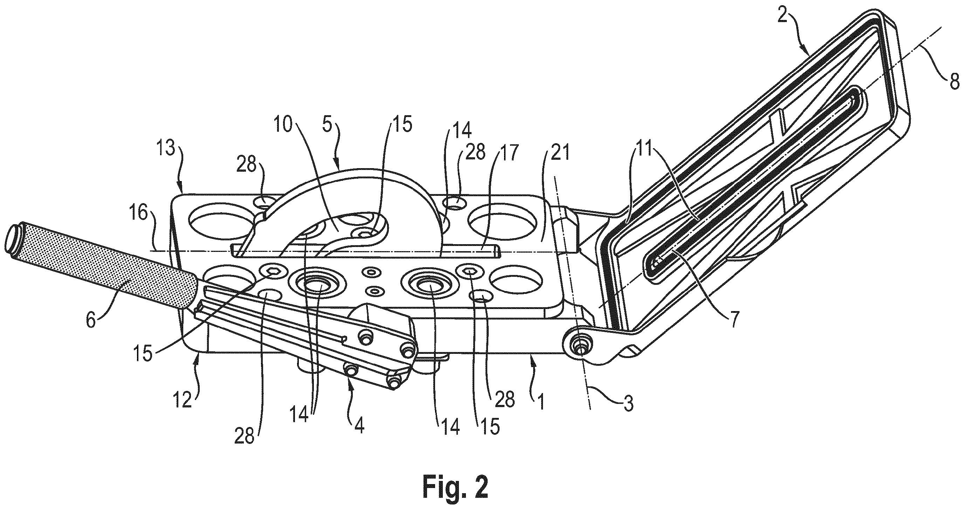

Die Darstellung in Fig. 2 zeigt schematisch und exemplarisch eine perspektivische Ansicht des ersten Kupplungsteils 1 gemäß Fig. 1 mit geöffnetem Deckel 2. An der Innenseite des Deckels 2 ist im äußeren Randbereich als auch um die Aussparung 7 herum jeweils ein umlaufendes Dichtungselement 11 angeordnet. In geschlossener Position des Deckels 2 dichten die Dichtungselemente 11 die Oberfläche des ersten Kupplungsteils 1 ab, um das Eindringen von Schmutz und Staub zu verhindern.

Das erste Kupplungsteil 1 ist ortsfest an der landwirtschaftlichen Arbeitsmaschine angeordnet. Bei einer als selbstfahrende Erntemaschine ausgeführten landwirtschaftlichen Arbeitsmaschine, insbesondere einem Mähdrescher oder Feldhäcksler, ist das erste Kupplungsteil 1 bevorzugt am Schrägförderer oder Einzugskanal der Erntemaschine angeordnet.

Das erste Kupplungsteil 1 umfasst eine Grundplatte 12 und eine Deckplatte 13. Die Deckplatte 13 ist auf die Grundplatte 12 aufgesetzt. In der Grundplatte 12 sind Kupplungsmuffen 14 angeordnet. Durch die auf die Grundplatte 12 aufsetzbare Deckplatte 13 können Verbindungsstellen der Kupplungsmuffen 14 verdeckt werden. Die, insbesondere lösbare, Befestigung der Deckplatte 13 auf der Grundplatte 12 kann beispielsweise mittels Schraubverbindungen 15 erfolgen. Die dem Deckel 2 zugewandte Oberseite der Deckplatte 13 bildet eine Anlagefläche 21 des ersten Kupplungsteils 1.

Das erste Kupplungsteil 1 weist eine achsparallel zur Längsachse 16 des ersten Kupplungsteils 1 verlaufende längsschlitzförmige Aussparung 17 auf, in welcher das das erste Kupplungsteil 1 durchdringende Verriegelungselement 5 drehfest an einer Welle 18 angeordnet ist. Die längsschlitzförmige Aussparung 17 des ersten Kupplungsteils 1 und die längsschlitzförmige Aussparung 7 im Deckel liegen in verschlossenem Zustand deckungsgleich übereinander. Die längsschlitzförmige Aussparung 17 verläuft durch die Grundplatte 12 und die darauf befestigte Deckplatte 13.

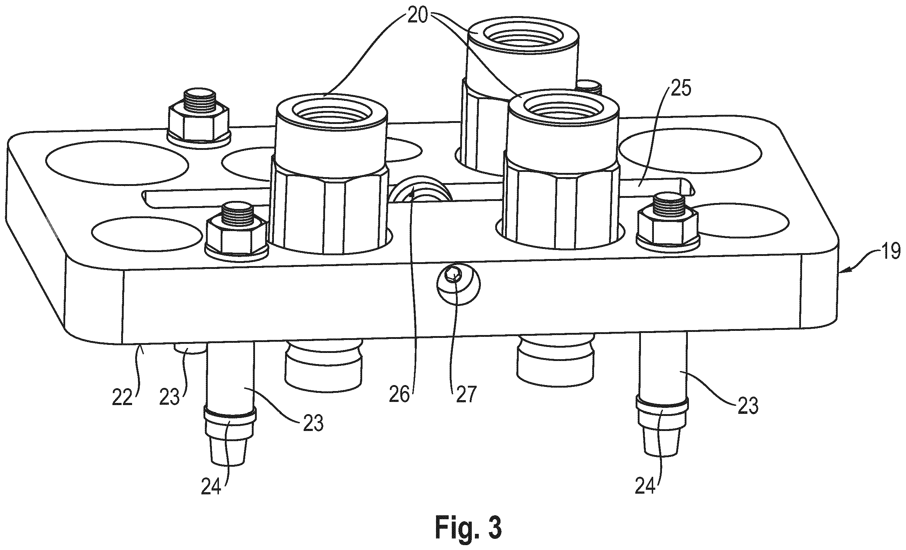

In Fig. 3 ist schematisch und exemplarisch eine perspektivische Ansicht eines zweiten Kupplungsteils 19 der Multikupplungsvorrichtung dargestellt. An dem im Wesentlichen plattenförmigen zweiten Kupplungsteil 19 sind Steckteile 20 sowie zumindest ein in vertikaler Richtung über eine Anlagefläche 22 überstehendes Zentrierelement 23 befestigt. Hier und vorzugsweise sind mehrere Zentrierelement 23 an dem zweiten Kupplungsteil 19 angeordnet. Das zumindest eine Zentrierelement 23 ist stiftförmig ausgeführt. Die Steckteile 20 ragen ebenfalls über die Anlagefläche 22 vertikal hinaus. Die Zentrierelemente 23 überragen die über die Anlagefläche 22 hinausragenden Steckteile 20. Die Steckteile 20 stehen mit den Kupplungsmuffen 14 des ersten Kupplungsteils 14 formschlüssig in Eingriff, wenn die beiden Kupplungsteile 1, 19 in einer Arretierposition mit ihren Anlageflächen 21, 22 aneinander liegen.

Das zumindest eine stiftförmig ausgeführte Zentrierelement 23 weist an seinem freien Ende eine umlaufende Nut auf, in welcher ein ringförmiges Dichtelement 24 angeordnet ist.

Besonders bevorzugt können vier Zentrierelemente 23 vorgesehen sein, wobei die Anordnung der vier Zentrierelemente 23 von einer quadratischen Anordnung abweicht. Hierdurch lässt sich eine ungewollte Verbindung von falschen Leitungen vermeiden. Die Zentrierelemente 23 sind mit korrespondierend geformten Aufnahmen 28 in der Anlagefläche 21 des ersten Kupplungsteils 1 formschlüssig in Eingriff bringbar. Die Aufnahmen 28 sind bevorzugt als Durchgangsbohrungen ausgeführt, welche sich durch die Deckplatte 13 und die darunterliegend angeordnete Grundplatte 12 erstrecken.

Das zweite Kupplungsteil 19 weist eine weitere zur Aussparung 17 des ersten Kupplungsteils 1 achsparallel verlaufende längsschlitzförmige Aussparung 25 auf. In der längsschlitzförmigen Aussparung 25 ist ein um eine Achse 27 drehbares Lager 26 angeordnet. Die Achse 27 erstreckt sich quer zur längsschlitzförmigen Aussparung 25. Das Lager 26 ist hier und vorzugsweise als Wälzlager ausgeführt. Dazu ist der Innenring des Wälzlagers drehfest auf der Achse 27 angeordnet. Der Außenring des als Wälzlager ausgeführten Lagers 26 ist gegenüber der Achse 26 frei drehbar.

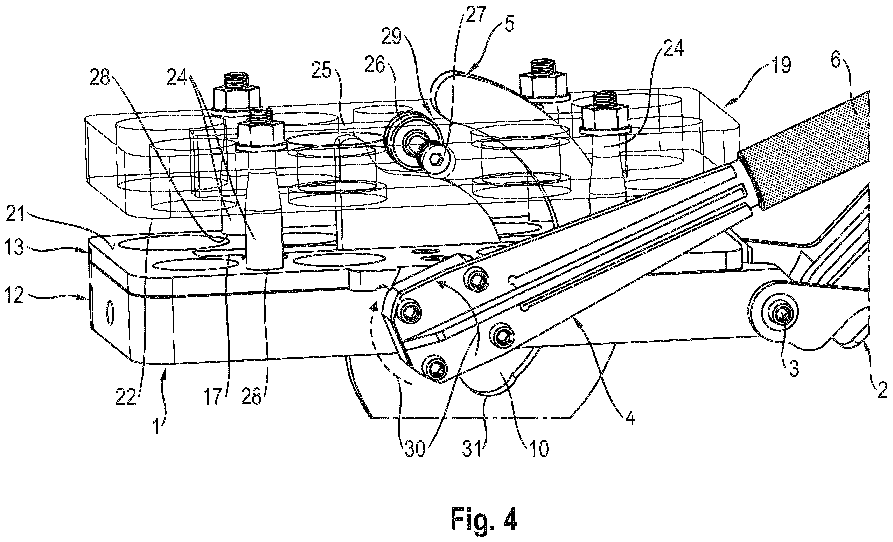

Die Darstellung in Fig. 4 zeigt schematisch und exemplarisch eine perspektivische Ansicht des ersten Kupplungsteils 1 und des zweiten Kupplungsteils 19 vor dem Arretieren durch die Betätigung des Betätigungsmittels 4. Zur Vereinfachung der Darstellung sind die Kupplungsmuffen 14 und die Steckteile 20 in Fig. 4 nicht dargestellt. Das zweite Kupplungsteil 2 wird an das erste Kupplungsteil 1 herangeführt, wobei das zumindest eine Zentrierelement 23 abschnittsweise mit der korrespondierenden Aufnahmen 28 des ersten Kupplungsteils 1 in Eingriff gebracht wird. Dadurch wird eine Zentrierung des zweiten Kupplungsteils 19 gegenüber dem ersten Kupplungsteil 1 erreicht.

Hier und vorzugsweise sind in dem zweiten Kupplungsteil 19 vier Zentrierelemente 23 eingeschraubt. Die Schraubpunkte der Zentrierelemente 23 bilden einen Quader, so dass die beiden Kupplungsteile 1, 19 der Multikupplungsvorrichtung nur in einer durch die Anordnung der Zentrierelemente 23 vorgegebene Orientierung zusammengesteckt werden können. Das verhindert ein ungewolltes Verbinden falscher Leitungen. Die im unterem Bereich der Zentrierelemente 23 in den Nuten angeordneten Dichtelemente, vorzugsweise O-Ringe, dienen dazu, die als Durchgangsbohrungen ausgeführten Aufnahmen 28 im zweiten Kupplungsteil zu reinigen. Dies reduziert den Schmutzeintrag und den Verschleiß.

In einer im Wesentlichen senkrecht aufragenden Stellung des Verriegelungselementes 5, in welcher eine Aufnahmeöffnung 29 des Aufnahmebereichs 10 dem zweite Kupplungsteil 19 zugewandt ist, befindet sich das Lager 26 in einer Position innerhalb der Aufnahmeöffnung 29 des Aufnahmebereichs 10. Die Aufnahmeöffnung 29 ist dem Lager 26 des zweiten Kupplungsteils 19 zugewandt. Durch eine Schwenkbewegung 30, hier im Gegenuhrzeigersinn, bewegt sich das Lager 26 im bogenförmigen Aufnahmebereich 10 geführt. Der bogenförmigen Aufnahmebereich 10 in dem Verriegelungselement 5 bildet eine Kurvenbahn aus, entlang der das Lager 26 geführt ist. Das Lager 26 rollt dabei mit seinem Außenring an der Oberfläche des bogenförmigen Aufnahmebereichs 10 in dem Verriegelungselement 5 ab. Durch das in dem bogenförmigen Aufnahmebereich 10 geführte Lager 26 wird die mittels des Betätigungsmittels 4 auf das Verriegelungselement 5 übertragene Schwenkbewegung 30 in eine translatorische Bewegung des zweiten Kupplungsteils 19 transformiert. Dadurch wird das zweite Kupplungsteil 19 mit seiner Anlagefläche 22 an die Anlagefläche 21 des ersten Kupplungsteils 1 herangezogen. Dabei wird das zweite Kupplungsteil 19 durch das zumindest eine Zentrierelement 23, welches zuvor mit dem ersten Kupplungsteil 1 abschnittsweise in Eingriff gebracht wurde, geradlinig geführt.

Im in Fig. 4 dargestellten gekuppelten Zustand der beiden Kupplungsteile 1, 19 besteht eine Arretierung des zweiten Kupplungsteils 19 durch eine radiale Einbuchtung 31 am geschlossenen Ende des Aufnahmebereichs 10. In dieser Einbuchtung 31 liegt das Lager 26 abschnittsweise formschlüssig am Verriegelungselement 5 an. In dieser Arretierposition ist die Aufnahmeöffnung 29 des Aufnahmebereichs 10 dem zweite Kupplungsteil 19 abgewandt.

Das Überführen der beiden Kupplungsteile 1, 19 in eine Entriegelungsposition erfolgt entgegen dem Wirkprinzip, mit dem die Multikupplungsvorrichtung in ihre Arretierposition überführt wird. In diesem Fall wird das zweite Kupplungsteil 19 mit einer konstanten Geschwindigkeit im Verhältnis zur Winkelgeschwindigkeit, mit welcher das Betätigungsmittel 4 durch eine Schwenkbewegung 30 (stichliniert dargestellt) im Uhrzeigersinn bewegt wird, durch die in dem Aufnahmebereich 10 geführte Bewegung des Lagers 26 von dem ersten Kupplungsteil 1 weggedrückt. In im Wesentlichen senkrecht aufragender Stellung des Verriegelungselementes 5, in welcher die Aufnahmeöffnung 29 des Aufnahmebereichs 10 dem zweite Kupplungsteil 19 zugewandt ist, sind auch alle Steckteile 20 und Kupplungsmuffen voneinander getrennt. Lediglich das zumindest eine Zentrierelement 23 steht noch Kontakt mit den Ausnehmungen 28 des ersten Kupplungsteils 1.

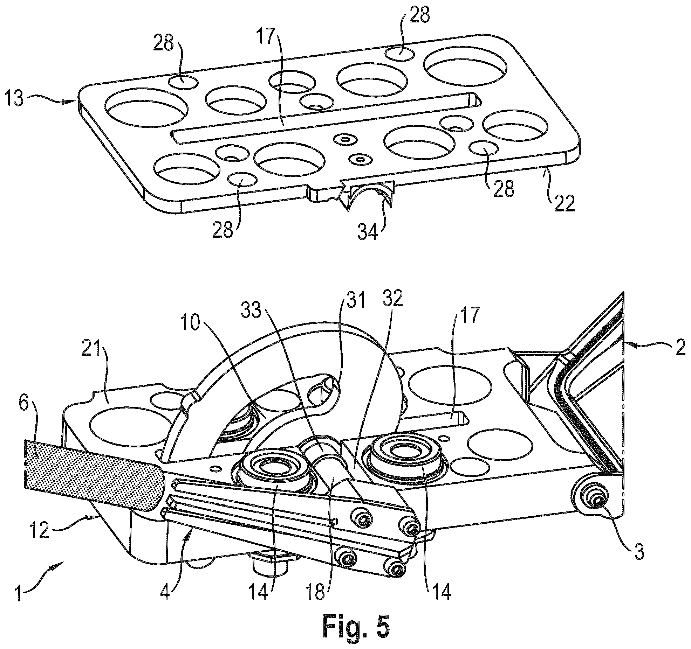

Die Darstellung in Fig. 5 zeigt schematisch und exemplarisch eine perspektivische Ansicht der Grundplatte 12 und der von dieser gelöste dargestellten Deckplatte 13 des ersten Kupplungsteils 1. In der Grundplatte 12 befindet sich eine Ausnehmung 32, weiche sich vom Rand der Grundplatte 12 bis zu der längsschlitzförmigen Aussparung 17 erstreckt. In der Ausnehmung 32 ist die Welle 18 angeordnet. Die Welle 18 ist durch zumindest ein Gleitlager 33 drehbar in der Ausnehmung 32 gelagert. Am freien Ende der Welle 18, welches abschnittsweise über den Rand der Grundplatte 12 hinausragt, ist das Betätigungsmittel 4 drehfest angeordnet. An der Unterseite der Deckplatte 13, mit der diese an der Grundplatte 12 anliegt, ist ebenfalls eine Ausnehmung 34 ausgebildet. Für die Aufnahme des zumindest einen Gleitlagers 33, sind die Ausnehmungen 32, 34 korrespondierend ausgeführt, um zwischen den beiden Ausnehmungen 32, 34 das zumindest eine Gleitlager 33 und die darin gelagerte Welle 18 radial zu fixieren. Die Außenkontur der Ausnehmung 34 schließt formschlüssig mit der Kontur der Ausnehmung 32 in der Grundplatte 12 ab. Das durch die Welle 18 mit dem Betätigungsmittel 4 drehfest verbundene Verriegelungselement 5 bilden eine eigenständige und unabhängige Einheit.

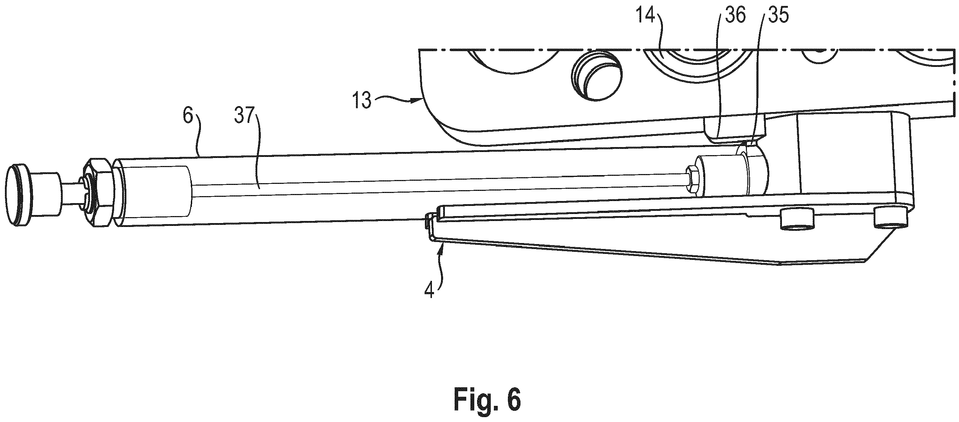

In Fig. 6 ist schematisch und exemplarisch eine perspektivische Ansicht des Betätigungsmittels 4 der Multikupplungsvorrichtung dargestellt. Das Betätigungsmittel 4 ist teilweise freigeschnitten dargestellt. Zum Arretieren des Betätigungsmittels 4 ist vorgesehen, dass ein federbelastetes Arretierelement 36 am der Welle 18 zugewandten Ende des als Hebelarm ausgeführten Betätigungsmittels 4 angeordnet ist. Das Arretierelement 35 hintergreift beim Erreichen der Arretierposition der Multikupplungsvorrichtung einen am ersten Kupplungsteil 1 angeordneten Vorsprung 36 hintergreift.

Zum Lösen der Arretierung des Betätigungsmittels 4 ist im Griffteil 6 des Betätigungsmittels 4 ein Federbolzen angeordnet, durch den zum Lösen der Arretierung des Betätigungsmittels 4 eine der Federkraft entgegenwirkende Gegenkraft auf das Arretierelement 35 ausübbar ist, um dieses axial in Richtung der Welle 18 zu verschieben. Die durch den Federbolzen aufbringbare Gegenkraft ist durch ein im Griffteil 6 innenliegend angeordnetes Gestänge 37 auf das arretierte Arretierelement 35 aufbringbar.

Die vorstehend beschriebene Arretierung des Betätigungsmittels 4 wird auch beim Verschließen des ersten Kupplungsteils 1 durch den Deckel 2 verwendet, um das erste Kupplungsteil 1 vor Verschmutzung zu schützen.

### Bezugszeichenliste

| | | | |
|---|---|---|---|
| 1 | Erstes Kupplungsteil | 34 | Ausnehmung |
| 2 | Deckel | 35 | Arretierelement |
| 3 | Achse | 36 | Vorsprung |
| 4 | Betätigungsmittel | 37 | Gestänge |
| 5 | Verriegelungselement | | |
| 6 | Griffteil | | |
| 7 | Aussparung | | |
| 8 | Längsachse | | |
| 9 | Steg | | |
| 10 | Aufnahmebereich | | |
| 11 | Dichtungselement | | |
| 12 | Grundplatte | | |
| 13 | Deckplatte | | |
| 14 | Kupplungsmuffe | | |
| 15 | Schraubverbindung | | |
| 16 | Längsachse | | |
| 17 | Aussparung | | |
| 18 | Welle | | |
| 19 | Zweites Kupplungsteil | | |
| 20 | Steckteil | | |
| 21 | Anlagefläche | | |
| 22 | Anlagefläche | | |
| 23 | Zentrierelement | | |
| 24 | Dichtelement | | |
| 25 | Aussparung | | |
| 26 | Lager | | |
| 27 | Achse | | |
| 28 | Aufnahme | | |
| 29 | Aufnahmeöffnung | | |
| 30 | Schwenkbewegung | | |
| 31 | Einbuchtung | | |
| 32 | Ausnehmung | | |
| 33 | Gleitlager | | |

## Patentansprüche

1. Multikupplungsvorrichtung für eine landwirtschaftliche Arbeitsmaschine, wobei die Multikupplungsvorrichtung einen ersten Kupplungsteil (1) und einen mit dem ersten Kupplungsteil (1) verbindbaren zweiten Kupplungsteil (19) aufweist, wobei am ersten Kupplungsteil (1) eine Arretiervorrichtung angeordnet ist, um in einer Arretierposition die beiden mit ihren Anlageflächen (21, 22) aneinander liegenden Kupplungsteile (1, 19) zu arretieren, **dadurch gekennzeichnet, dass** die Arretiervorrichtung ein mittig im ersten Kupplungsteil (1) angeordnetes, gegenüber dem ersten Kupplungsteil (1) relativbewegliches Verriegelungselement (5) aufweist, welches mit dem zweiten Kupplungsteil (19) in der Arretierposition in Eingriff bringbar ist.

2. Multikupplungsvorrichtung nach Anspruch 1, **dadurch gekennzeichnet, dass** das Verriegelungselement (5) sich senkrecht zur Anlagefläche (21) des ersten Kupplungsteils (1) erstreckend angeordnet ist, wobei das Verriegelungselement (5) das erste Kupplungsteil (1) in vertikaler Richtung durchdringt.

3. Multikupplungsvorrichtung nach Anspruch 1 oder 2, **dadurch gekennzeichnet, dass** das Verriegelungselement (5) auf einer Welle (18) angeordnet ist, die im ersten Kupplungsteil (1) gelagert ist.

4. Multikupplungsvorrichtung nach Anspruch 3, **dadurch gekennzeichnet, dass** das Verriegelungselement (5) durch ein randseitig am ersten Kupplungsteil (1) angeordnetes Betätigungsmittel (4), welches drehfest am freien Ende der Welle (18) angreift, betätigbar ist, um das Verriegelungselement (5) durch Drehen der Welle (18) zwischen einer Entriegelungsposition und der Arretierposition und umgekehrt zu überführen.

5. Multikupplungsvorrichtung nach Anspruch 4, **dadurch gekennzeichnet, dass** das erste Kupplungsteil (1) eine achsparallel zur Längsachse (16) des ersten Kupplungsteils (1) verlaufende längsschlitzförmige Aussparung (17) aufweist, in welcher das das erste Kupplungsteil (1) in vertikaler Richtung durchdringende Verriegelungselement (5) um die Welle (18) drehbar angeordnet ist.

6. Multikupplungsvorrichtung nach einem der vorangehenden Ansprüche, **dadurch gekennzeichnet, dass** an dem zweiten Kupplungsteil (19) zumindest ein über die Anlagefläche (22) des zweiten Kupplungsteils (19) in vertikaler Richtung überstehendes Zentrierelement (23) angeordnet ist, welches mit zumindest einer korrespondierend geformten Aufnahme (28) in der Anlagefläche (21) des ersten Kupplungsteils (1) formschlüssig in Eingriff bringbar ist.

7. Multikupplungsvorrichtung nach Anspruch 6, **dadurch gekennzeichnet, dass** das zumindest eine Zentrierelement (23) stiftförmig ausgeführt ist und an seinem freien Ende eine Nut aufweist, in welcher ein Dichtelement (24) angeordnet ist.

8. Multikupplungsvorrichtung nach einem der vorangehenden Ansprüche, **dadurch gekennzeichnet, dass** das Verriegelungselement (5) einen bogenförmigen Aufnahmebereich (10) aufweist, der ein im zweiten Kupplungsteil (19) angeordnetes Lager (26) während eines Arretiervorgangs aufnimmt, wobei das Lager (26) in einer zur längsschlitzförmigen Aussparung (17) des ersten Kupplungsteils (1) achsparallelen längsschlitzförmigen Aussparung (25) im zweiten Kupplungsteil (19) angeordnet ist.

9. Multikupplungsvorrichtung nach Anspruch 8, **dadurch gekennzeichnet, dass** das Lager (26) als Wälzlager ausgeführt ist.

10. Multikupplungsvorrichtung nach einem der Ansprüche 7 bis 9, **dadurch gekennzeichnet, dass** am ersten Kupplungsteil (1) ein Deckel (2) schwenkbar angelenkt ist, welcher eine zu seiner Längsachse (8) achsparallel verlaufende längsschlitzförmige Aussparung (7) aufweist, in welchem ein querverlaufender Steg (9) angeordnet ist, welcher von dem bogenförmigen Aufnahmebereich (10) zum Verschließen des ersten Kupplungsteils (1) aufgenommen wird.

11. Multikupplungsvorrichtung nach einem der Ansprüche 4 bis 10, **dadurch gekennzeichnet, dass** das erste Kupplungsteil (1) eine Grundplatte (12) und eine, insbesondere lösbar, an der Grundplatte (12) angeordnete Deckplatte (13) aufweist, zwischen denen das an der Welle (18) angeordnete Verriegelungselement (5) und Betätigungsmittel (4) mittels zumindest eines Gleitlagers (33) gelagert sind.

12. Multikupplungsvorrichtung nach einem der Ansprüche 4 bis 11, **dadurch gekennzeichnet, dass** das Betätigungsmittel (4) ein federbelastetes Arretierelement (35) aufweist, welches beim Erreichen der Arretierposition einen am ersten Kupplungsteil (1) angeordneten Vorsprung (36) hintergreift.

13. Multikupplungsvorrichtung nach Anspruch 12, **dadurch gekennzeichnet, dass** das Betätigungsmittel (4) ein Griffteil (6) umfasst, in welchem ein Federbolzen angeordnet ist, durch den zum Lösen der Arretierung des Betätigungsmittels (4) eine der Federkraft entgegenwirkende Gegenkraft auf das Arretierelement (35) ausübbar ist, um dieses axial zu verschieben.

14. Multikupplungsvorrichtung nach Anspruch 13, **dadurch gekennzeichnet, dass** die durch den Federbolzen aufbringbare Gegenkraft durch ein im Griffteil (6) innenliegend angeordnetes Gestänge (37) auf das arretierte Arretierelement (35) aufbringbar ist.

15. Landwirtschaftliche Arbeitsmaschine mit einer Multikupplungsvorrichtung nach einem der vorangehenden Ansprüche, **dadurch gekennzeichnet, dass** das erste Kupplungsteil (1) an der Arbeitsmaschine angeordnet ist und das zweite Kupplungsteil (19) an einem an der Arbeitsmaschine zu adaptierenden landwirtschaftlichen Anbaugerät.
